# FASCICULE DE BREVET EUROPEEN

(11) **EP 1 368 843 B1**
(45) Date de publication et mention de la délivrance du brevet: **19.04.2017**
(21) Numéro de dépôt: 02727348.1
(22) Date de dépôt: 04.03.2002
(51) Int. Cl.: H01M 2/26, H01M 2/34

(54) **DISPOSITIF DE RACCORDEMENT POUR ACCUMULATEUR ELECTRIQUE**
ANSCHLUSSVORRICHTUNG FÜR ELEKTRISCHEN AKKUMULATOR
CONNECTION DEVICE FOR AN ELECTRIC ACCUMULATOR

(30) Priorité: 07.03.2001 FR 0103093
(43) Date de publication de la demande: 10.12.2003
(73) Titulaire: Blue Solutions, 29500 Ergué Gabéric (FR)
(72) Inventeur: BARRAULT, Michel, F-38710 Mens (FR); BETTEGA, Eric, F-38120 Le Fontanil Cornillon (FR); CADOUX, Yvan, F-38960 Saint-Aupre (FR)
(74) Mandataire: Regimbeau
(86) Numéro de dépôt international: PCT/EP2002/002282
(87) Numéro de publication internationale: WO 2002/071510

(56) Documents cités:
- US-A- 4 283 470
- US-A- 4 729 162
- PATENT ABSTRACTS OF JAPAN vol. 1996, no. 06, 28 juin 1996 (1996-06-28) -& JP 08 050920 A (TOYO TAKASAGO KANDENCHI KK;OTHERS: 01), 20 février 1996 (1996-02-20)
- PATENT ABSTRACTS OF JAPAN vol. 1996, no. 11, 29 novembre 1996 (1996-11-29) -& JP 08 185850 A (SONY CORP), 16 juillet 1996 (1996-07-16)
- PATENT ABSTRACTS OF JAPAN vol. 1995, no. 11, 26 décembre 1995 (1995-12-26) -& JP 07 220755 A (TDK CORP), 18 août 1995 (1995-08-18)
- PATENT ABSTRACTS OF JAPAN vol. 1998, no. 12, 31 octobre 1998 (1998-10-31) -& JP 10 188946 A (TOYO TAKASAGO KANDENCHI KK), 21 juillet 1998 (1998-07-21)
- PATENT ABSTRACTS OF JAPAN vol. 016, no. 423 (E-1260), 7 septembre 1992 (1992-09-07) -& JP 04 147574 A (TOUYOU TAKASAGO KANDENCHI KK;OTHERS: 01), 21 mai 1992 (1992-05-21)
- PATENT ABSTRACTS OF JAPAN vol. 017, no. 535 (E-1439), 27 septembre 1993 (1993-09-27) -& JP 05 151993 A (TOYO TAKASAGO KANDENCHI KK;OTHERS: 01), 18 juin 1993 (1993-06-18)
- PATENT ABSTRACTS OF JAPAN vol. 1999, no. 01, 29 janvier 1999 (1999-01-29) -& JP 10 270010 A (AERO BATTERY CORP:KK), 9 octobre 1998 (1998-10-09)
- PATENT ABSTRACTS OF JAPAN vol. 018, no. 551 (E-1619), 20 octobre 1994 (1994-10-20) -& JP 06 203827 A (TOSHIBA BATTERY CO LTD;OTHERS: 02), 22 juillet 1994 (1994-07-22)
- PATENT ABSTRACTS OF JAPAN vol. 1996, no. 01, 31 janvier 1996 (1996-01-31) -& JP 07 249404 A (HAIBARU:KK), 26 septembre 1995 (1995-09-26)
- PATENT ABSTRACTS OF JAPAN vol. 1999, no. 08, 30 juin 1999 (1999-06-30) -& JP 11 067188 A (JAPAN STORAGE BATTERY CO LTD), 9 mars 1999 (1999-03-09)
- PATENT ABSTRACTS OF JAPAN vol. 1996, no. 06, 28 juin 1996 (1996-06-28) & JP 08 050891 A (FUJI ELELCTROCHEM CO LTD), 20 février 1996 (1996-02-20)
- PATENT ABSTRACTS OF JAPAN vol. 1998, no. 11, 30 septembre 1998 (1998-09-30) -& JP 10 162805 A (SHIN KOBE ELECTRIC MACH CO LTD), 19 juin 1998 (1998-06-19)
- PATENT ABSTRACTS OF JAPAN vol. 013, no. 232 (E-765), 29 mai 1989 (1989-05-29) -& JP 01 038966 A (TOSHIBA BATTERY CO LTD), 9 février 1989 (1989-02-09)
- PATENT ABSTRACTS OF JAPAN vol. 2000, no. 25, 12 avril 2001 (2001-04-12) -& JP 2001 229912 A (MITSUBISHI ELECTRIC CORP), 24 août 2001 (2001-08-24)

## Description

### Domaine technique de l'invention

L'invention est relative à un dispositif de raccordement pour un accumulateur électrique comprenant un premier sous-ensemble de connexion associé à l'une des électrodes, et un deuxième sous-ensemble de connexion associé à l'autre électrode.

### Etat de la technique

Le raccordement électrique des accumulateurs électriques s'effectue généralement au moyen de connecteurs enfichables dans des électrodes en forme de languettes, ou de colliers à vis fixés sur des plots conducteurs de polarités opposées. La fiabilité de l'interface de connexion peut être influencée par la corrosion ou un mauvais serrage, avec des risques d'augmentation de la résistance électrique. Il en résulte une chute de tension importante diminuant le rendement électrique de l'accumulateur, et une mauvaise évacuation des calories lors du fonctionnement de ce dernier. Le document JP 08 050920 décrit une cellule secondaire au lithium comprenant une plaque en plomb positive qui est raccordée à une portion de patte collecteur de courant via un fusible. En cas de court-circuit, le fusible brûle de sorte que l'électrode correspondante est séparée de la cellule.

Le document JP 08 185850 décrit une batterie secondaire lithium-ion dans laquelle les fils de plomb des collecteurs de courant sont formés comme des fusibles.

Le document US 4 729 162 décrit un élément conducteur destiné à procurer un contact électrique avec une électrode. L'élément conducteur présente une pluralité de dents destinées à percer la feuille de métal de l'électrode.

Le document US 4 046 882 décrit une languette de raccordement électrique présentant une pluralité de protubérances permettant d'établir un contact électrique et mécanique avec une électrode enroulée.

### Objet de l'invention

L'objet de l'invention consiste à réaliser un dispositif de raccordement pour un accumulateur, permettant d'obtenir une qualité de contact durable, une faible chute de tension, et une protection contre les surcharges électriques et un échauffement anormal.

Le dispositif selon l'invention comprend un premier sous-ensemble de connexion associé à l'une des électrodes, et un deuxième sous-ensemble de connexion associé à l'autre électrode, caractérisé en ce que le premier sous-ensemble de connexion comporte :
- une lame métallique et conductrice ayant une surface interne dotée d'une pluralité de picots destinés à s'incruster dans l'électrode pour établir le contact électrique,
- et des moyens de protection thermique logés dans un module fixé et connecté électriquement à l'une des extrémités de la lame, les moyens de protection thermique comportant un interrupteur thermique composé d'une lamelle conductrice et élastique, et d'un intervalle de coupure rempli d'une pâte conductrice ayant un point de ramollissement prédéterminé en fonction de la température, la lamelle conductrice sollicitant l'interrupteur vers la position d'ouverture après que la température dépasse un seuil prédéterminé.

Selon un mode de réalisation préférentiel, les picots sont répartis sur toute la surface de la lame venant s'appliquer contre l'électrode. Une feuille de métal conducteur mou, notamment à base de lithium, recouvre avantageusement la surface plane de l'électrode avant l'application par pression de la lame. Le dispositif peut comprendre en outre des moyens de protection électrique. Les moyens de protection électrique comportent un interrupteur électrique comprenant un coupe-circuit à fusible calibré, lequel est constitué par une restriction locale de la section du chemin conducteur d'une pièce de liaison électrique.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels :
- la figure 1 est une vue schématique en perspective de trois éléments accumulateurs équipés du dispositif de raccordement selon l'invention ;
- la figure 2 montre une vue en coupe partielle selon la ligne 2-2 de la figure 1, illustrant le premier sous-ensemble de connexion fixé à l'anode d'un élément accumulateur ;
- la figure 3 représente une vue à échelle agrandie d'un détail de la figure 2 ;
- les figures 4 et 5 montrent deux exemples de réalisation de la lame à picots constituant le premier sous-ensemble de connexion ;
- la figure 6 est une vue éclatée en perspective du module de protection associé à la partie supérieure de la lame à picots ;
- la figure 7 représente une vue en coupe verticale de la figure 6 après assemblage du module de protection à la lame ;
- les figures 8 et 10 sont des vues en perspective illustrant deux variantes de réalisation du module de protection ;
- la figure 9 est une vue en coupe selon la ligne 9-9 de la figure 10.

### Description d'un mode de réalisation préférentiel.

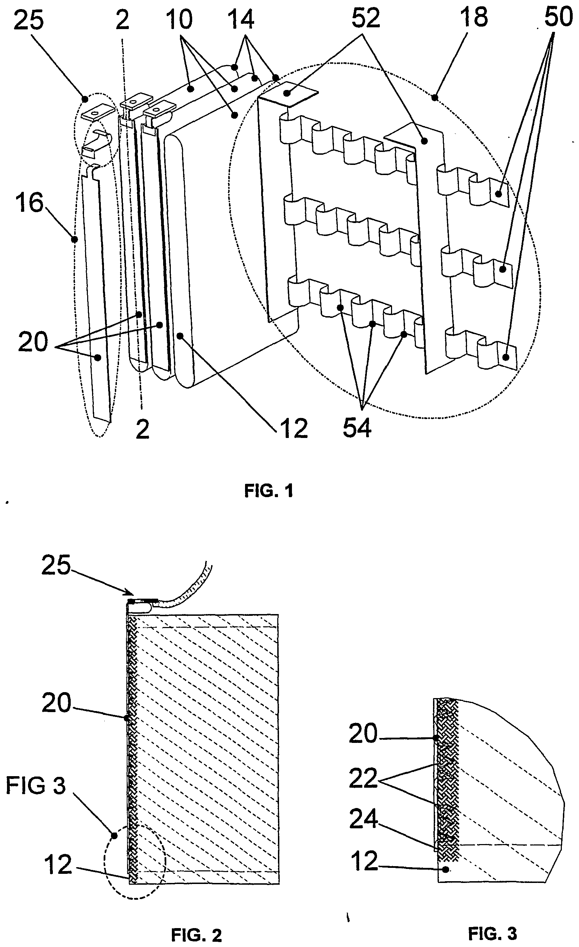

En référence aux figures 1 à 3, des éléments accumulateurs 10 modulaires sont montés côte à côte en étant connectés à un dispositif de raccordement électrique. Les petites faces opposées de chaque élément accumulateur 10 sont dotées d'une paire d'électrodes 12,14 planes appelées respectivement anode et cathode. Le dispositif de raccordement est composé d'un premier sous-ensemble de connexion 16 associé à l'anode de chaque élément accumulateur 10, et d'un deuxième sous-ensemble de connexion 18 associé aux cathodes de l'ensemble des éléments accumulateurs 10.

Le premier sous-ensemble de connexion 16 de l'anode est agencé pour assurer une fonction de reprise de contact électrique, et une fonction de protection thermique et/ou électrique. Il comporte une lame 20 métallique rectangulaire en matériau conducteur, ayant une surface interne dotée d'une pluralité de picots 22. La première électrode 12 est recouverte par une feuille 24 de métal mou, par exemple de Lithium, contre laquelle la lame 20 vient en appui. Les picots 22 s'incrustent dans la première électrode 12, et le métal mou de la feuille 24 se déforme sous l'effet de la pression mécanique exercée depuis la face extérieure lisse de la lame 20, de manière à obtenir un bon contact entre l'anode et le premier sous-ensemble de connexion 16.

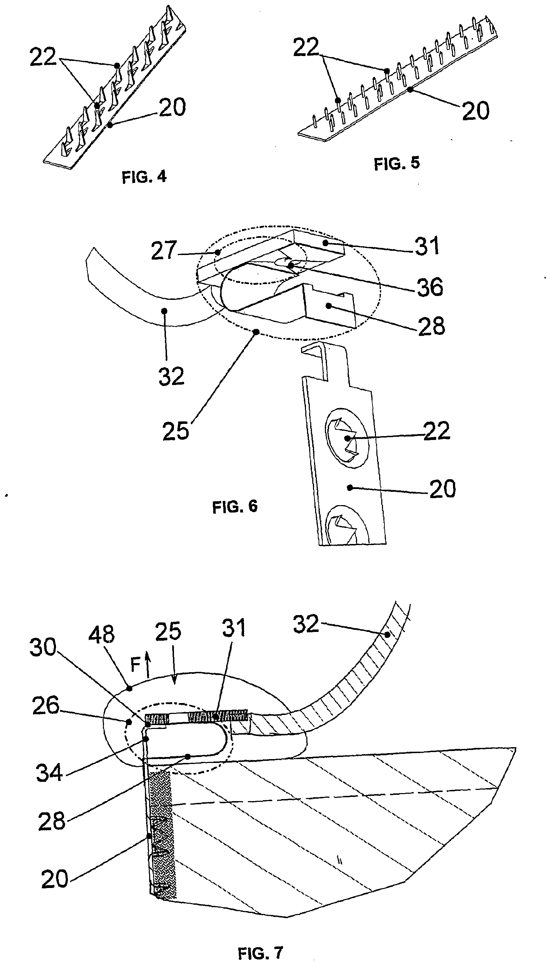

Les picots 22 répartis sur la surface interne de la lame 20 conductrice peuvent être réalisés par tout procédé, notamment par emboutissage ou perforation d'une tôle (figures 2 et 3), par matriçage (figure 4), par dépôt dendritique ou par réaction chimique ou électrochimique (figure 5).

Le bon contact de la lame 20 sur l'anode garantit la conductibilité électrique et thermique de l'interface de connexion, permettant d'une part la décharge de l'élément accumulateur 10 avec un rendement électrique optimum, et d'autre part l'évacuation des calories engendrées par effet Joule suite à la circulation du courant permanent, ou à un défaut interne.

Sur les figures 6 et 7, les moyens de protection comportent un module 25 fixé et connecté électriquement à l'extrémité supérieure de la lame 20, et pourvu d'un interrupteur thermique 26 et d'un interrupteur électrique 27. Selon un premier mode de réalisation, l'interrupteur thermique 26 est composé d'une lamelle 28 conductrice et élastique, et d'un intervalle de coupure rempli d'une pâte 30 conductrice ayant un point de ramollissement prédéterminé en fonction de la température. La lamelle 28 constitue un ressort taré conducteur inséré entre la lame 20 et une pièce de liaison 31 conductrice à laquelle est branché le câble 32 d'alimentation de la charge.

La pâte 30 conductrice logée dans l'intervalle entre l'ergot 34 recourbé de la lame 20 et la pièce de liaison 31 reste à l'état solide tant que la température reste en-dessous du seuil de ramollissement. Le courant nominal débité par l'élément accumulateur 10 traverse en majorité la pâte 30 conductrice sans chute de tension notable, étant donné que la résistance électrique de la lamelle 28 du ressort en acier est supérieure à celle de la pâte 30.

En cas d'élévation de température de la zone contrôlée, le franchissement du seuil de ramollissement de la pâte 30 dans l'intervalle de coupure provoque la détente de la lamelle 28 du ressort, et le basculement de la pièce de liaison 31 dans le sens de la flèche F avec l'ouverture des contacts délimitant l'intervalle de coupure. Le courant circule maintenant dans la lamelle 28 du ressort, dont la résistance électrique élevée limite l'intensité du courant. L'élément accumulateur 10 est ainsi protégé par l'interrupteur thermique 26 dès qu'un défaut interne ou une mauvaise utilisation entraîne un échauffement excessif.

L'interrupteur électrique 27 sur la figure 6 est constitué par un coupe-circuit à fusible calibré mis en série entre l'interrupteur thermique 26 et le câble 32 de sortie. Le coupe-circuit à fusible est formé par exemple par une restriction locale de la section 36 du chemin conducteur sur la pièce de liaison 31. La fusion par effet Joule de cette section 36 rétrécie s'effectue dès que l'intensité du courant dépasse un seuil de surcharge donné.

Les deux intervalles de coupure des deux interrupteurs 26, 27 sont connectés en série, et sont actionnés séparément l'un de l'autre. Dans une variante de réalisation, il est clair qu'une seule zone d'interruption électrique peut être utilisée pour réaliser les deux fonctions de protection thermique et électrique.

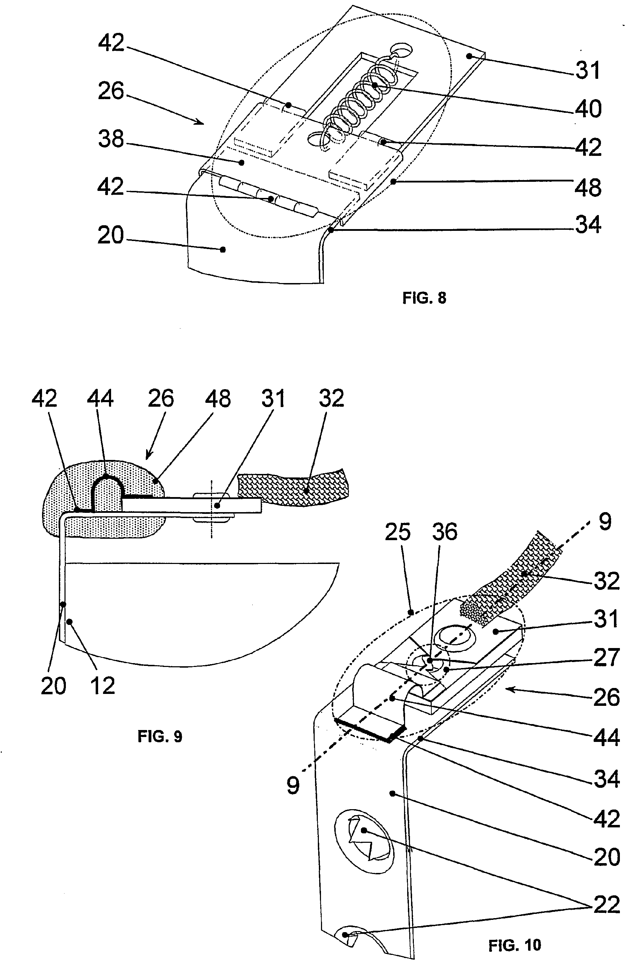

Sur la figure 8, qui illustre une variante de réalisation qui ne fait pas partie de l'invention, l'interrupteur thermique 26 comporte un fourreau 38 coulissant et conducteur, dans lequel sont insérés l'ergot 34 de la lame 20, et du côté opposé la pièce de liaison 31. Le fourreau 38 sert de pont conducteur entre l'ergot 34 et la pièce de liaison 31, et un ressort 40 de traction est accroché au fourreau 38. Une pâte thermofusible 42 maintient l'interrupteur thermique 26 en position fermée tant que la température se trouve en dessous d'un seuil prédéterminé. En cas de dépassement du seuil de température, la pâte 42 fond et le ressort 40 entraîne le fourreau 38 en translation pour l'ouverture de l'interrupteur thermique 26.

Sur les figures 9 et 10, l'interrupteur thermique 26 est équipé d'une lame ressort 44 en matière conductrice prenant appui sur l'ergot 34 et la pièce de liaison 31 avec interposition d'une matière thermofusible 42. La fusion de la matière 42 provoque l'ouverture du circuit suite à la détente de la lame ressort 44. L'interrupteur électrique 27 est identique à celui de la figure 6.

Dans les trois modes de réalisation des figures 7 à 10, le module 25 de protection est surmoulé par un matériau isolant rigide. Les zones de contact peuvent être enrobées par une matière isolante 48 non conductrice, notamment de la cire, ayant un point de fusion inférieur à celui de la pâte conductrice 30, 42 de l'interrupteur thermique 26.

Selon une variante de réalisation qui ne fait pas partie de l'invention, les protections thermiques et électriques décrites précédemment peuvent être assurées par un composant unique dont la résistance électrique dépend de sa température interne, par exemple une résistance CTP en série avec la lame 20. Un tel composant est susceptible de transiter d'une valeur de résistance interne très faible vers une résistance de valeur suffisante pour limiter ou interrompre le courant débité. L'énergie nécessaire pour ce changement d'état peut avoir deux origines, à savoir par l'environnement et par effet Joule.

Le deuxième sous-ensemble de connexion 18 du côté cathode est représenté à la figure 1. La reprise du contact électrique sur l'électrode 14 de plusieurs éléments accumulateurs 10 s'effectue par soudure à des clinquants 50. Ces derniers sont conformés selon un soufflet de manière à autoriser une dilatation transversale, et sont interconnectés par des plaques de reprise 52. La soudure des clinquants 50 avec les électrodes 14 est facilitée par un pré-étamage des zones de contacts 54.

## Revendications

1. Dispositif de raccordement pour un accumulateur (10) électrique comprenant un premier sous-ensemble de connexion (16) associé à l'une des électrodes (12), et un deuxième sous-ensemble de connexion (18) associé à l'autre électrode (14), **caractérisé en ce que** le premier sous-ensemble de connexion (16) comporte :
- une lame (20) métallique et conductrice ayant une surface interne dotée d'une pluralité de picots (22) destinés à s'incruster dans l'électrode (12) pour établir le contact électrique,
- et des moyens de protection thermique logés dans un module (25) fixé et connecté électriquement à l'une des extrémités de la lame (20), les moyens de protection thermique comportant un interrupteur thermique (26) composé d'une lamelle (28) conductrice et élastique, et d'un intervalle de coupure rempli d'une pâte (30) conductrice ayant un point de ramollissement prédéterminé en fonction de la température, la lamelle conductrice (28) sollicitant l'interrupteur (26) vers la position d'ouverture après que la température dépasse un seuil prédéterminé.

2. Dispositif de raccordement pour un accumulateur (10) électrique selon la revendication 1, **caractérisé en ce que** les picots (22) sont répartis sur toute la surface de la lame (20) venant s'appliquer contre l'électrode (12).

3. Dispositif de raccordement pour un accumulateur (10) électrique selon la revendication 1, **caractérisé en ce qu'**il comprend en outre une feuille (24) de métal conducteur mou pour recouvrir la surface plane de l'électrode (12) avant l'application par pression de la lame (20).

4. Dispositif de raccordement pour un accumulateur (10) électrique selon la revendication 3, **caractérisé en ce que** la feuille (24) est à base de lithium.

5. Dispositif de raccordement pour un accumulateur (10) électrique selon l'une quelconque des revendications 1 à 4, **caractérisé en ce qu'**il comprend en outre des moyens de protection électrique et **en ce que** les moyens de protection électrique comportent un interrupteur électrique (27) comprenant un coupe-circuit à fusible calibré, lequel est constitué par une restriction locale de la section (36) du chemin conducteur d'une pièce de liaison (31) électrique.

6. Dispositif de raccordement pour un accumulateur (10) électrique selon l'une des revendications 1 à 5, **caractérisé en ce que** le deuxième sous-ensemble de connexion (18) est obtenu par soudage de l'électrode (14) à un clinquant (50) après pré-étamage de la zone de contact (54).

## Patentansprüche

1. Anschlussvorrichtung für einen elektrischen Akkumulator (10), umfassend eine erste Verbindungs-Teilgruppe (16), die einer der Elektroden (12) zugeordnet ist, und eine zweite Verbindungs-Teilgruppe (18), die der anderen Elektrode (14) zugeordnet ist, **dadurch gekennzeichnet, dass** die erste Verbindungs-Teilgruppe (16) umfasst:
- eine metallische und leitende Lamelle (20), die eine Innenfläche hat, die mit einer Vielzahl von Zähnchen (22) versehen ist, die in eine Elektrode (12) eingreifen, um den elektrischen Kontakt herzustellen;
- und thermische Schutzmittel, die in einem Modul (25) untergebracht sind, das elektrisch an einem der Enden der Lamelle (20) befestigt und angeschlossen ist, wobei die thermischen Schutzmittel einen thermischen Schalter (26) umfassen, der aus einer leitenden und elastischen Lamelle (28) und einem Abschaltintervall gebildet ist, das mit einer leitenden Paste (30) gefüllt ist, die einen Aufweichpunkt hat, der in Abhängigkeit von der Temperatur vorbestimmt ist, wobei die leitende Lamelle (28) den Schalter (26) zu der Öffnungsposition anspricht, nachdem die Temperatur einen vorbestimmten Schwellenwert überschritten hat.

2. Anschlussvorrichtung für einen elektrischen Akkumulator (10) gemäß Anspruch 1, **dadurch gekennzeichnet, dass** die Zähnchen (22) über die gesamte Fläche der Lamelle (20) verteilt sind, die gegen die Elektrode (2) angewendet wird.

3. Anschlussvorrichtung für einen elektrischen Akkumulator (10) gemäß Anspruch 1, **dadurch gekennzeichnet, dass** sie darüber hinaus eine weiche leitende Metallfolie (24) zur Aufnahme der ebenen Fläche der Elektrode (12) vor der Anwendung der Lamelle (20) durch Druck umfasst.

4. Anschlussvorrichtung für einen elektrischen Akkumulator (10) gemäß Anspruch 3, **dadurch gekennzeichnet, dass** die Folie (24) auf Lithiumbasis ist.

5. Anschlussvorrichtung für einen elektrischen Akkumulator (10) gemäß irgendeinem der Ansprüche 1 bis 4, **dadurch gekennzeichnet, dass** sie darüber hinaus elektrische Schutzmittel umfasst und dass die elektrischen Schutzmittel einen elektrischen Schalter (27) umfassen, der einen Trennschalter mit geeichter Sicherung umfasst, der durch eine lokale Einschränkung des Querschnitts (36) des Leitweges eines elektrischen Verbindungsstücks (31) gebildet ist.

6. Anschlussvorrichtung für einen elektrischen Akkumulator (10) gemäß einem der Ansprüche 1 bis 5, **dadurch gekennzeichnet, dass** die zweite Verbindungs-Teilgruppe (18) per Verschweißen der Elektrode (14) mit einem Flitter (50) nach dem Vorverzinnen des Kontaktbereichs (54) erhalten wird.

## Claims

1. Connection device for an electric accumulator (10) comprising a first connection sub-assembly (16) which is associated with to one of the electrodes (12), and a second connection sub-assembly (18) which is associated with the other electrode (14), **characterised in that** the first connection sub-assembly (16) comprises:
- a metal conductive blade (20) having an inner surface provided with a plurality of spikes (22) intended to be embedded in the electrode (12) in order to establish the electrical contact,
- and thermal protection means housed in a module (25) that is fixed and electrically connected to one of the ends of the blade (20), with the thermal protection means comprising a thermal switch (26) made up of a conductive and elastic tab (28), and of a cut-off interval filled with a conductive paste (30) that has a predetermined softening point according to the temperature, with the conductive tab (28) urging the switch (26) to the open position after the temperature exceeds a predetermined threshold.

2. Connection device for an electric accumulator (10) according to claim 1, **characterised in that** the spikes (22) are distributed over the entire surface of the blade (20) bearing against the electrode (12).

3. Connection device for an electric accumulator (10) according to claim 1, **characterised in that** it further comprises a soft conductive metal sheet (24) in order to cover the flat surface of the electrode (12) before the application by pressure of the blade (20).

4. Connection device for an electric accumulator (10) according to claim 3, **characterised in that** the sheet (24) has a lithium base.

5. Connection device for an electric accumulator (10) according to any of claims 1 to 4, **characterised in that** it further comprises electrical protection means and **in that** the electrical protection means comprise an electrical switch (27) comprising a circuit breaker with calibrated fuse, which is comprised of a local restriction of the section (36) of the conductive path of an electrical connecting part (31).

6. Connection device for an electric accumulator (10) according to one of claims 1 to 5, **characterised in that** the second connection sub-assembly (18) is obtained by welding the electrode (14) to a foil (50) after pre-tinning of the contact zone (54).
